(19) Europäisches Patentamt
European Patent Office
Office européen des brevets

(11) **EP 3 877 945 B1**

(12) **EUROPÄISCHE PATENTSCHRIFT**

(45) Veröffentlichungstag und Bekanntmachung des Hinweises auf die Patenterteilung:
**04.01.2023   Patentblatt 2023/01**

(21) Anmeldenummer: **19800996.1**

(22) Anmeldetag: **06.11.2019**

(51) Internationale Patentklassifikation (IPC):
**G01N 15/14** *(2006.01)*      **G01N 21/85** *(2006.01)*
**G01N 21/88** *(2006.01)*      **G06T 5/50** *(2006.01)*

(52) Gemeinsame Patentklassifikation (CPC):
**G06T 5/50; G01N 21/8806; G01N 21/8851;**
G01N 15/1463; G01N 21/85; G01N 2015/1493;
G01N 2021/8893; G06T 2207/10152;
G06T 2207/20224

(86) Internationale Anmeldenummer:
**PCT/EP2019/080429**

(87) Internationale Veröffentlichungsnummer:
**WO 2020/094732 (14.05.2020 Gazette 2020/20)**

(54) **VERFAHREN UND VORRICHTUNG ZUM INSPIZIEREN EINER OBJEKTOBERFLÄCHE, INSBESONDERE ZUM INSPIZIEREN DER OBERFLÄCHE EINES PULVERBETTES MIT EINER VIELZAHL VON PULVERPARTIKELN**

METHOD AND APPARATUS FOR INSPECTING AN OBJECT SURFACE, MORE PARTICULARLY FOR INSPECTING THE SURFACE OF A POWDER BED WITH A MULTIPLICITY OF POWDER PARTICLES

PROCÉDÉ ET DISPOSITIF POUR INSPECTER LA SURFACE D'UN OBJET, NOTAMMENT POUR INSPECTER LA SURFACE D'UN LIT DE POUDRE COMPRENANT UNE PLURALITÉ DE PARTICULES DE POUDRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.11.2018   DE 102018127754**

(43) Veröffentlichungstag der Anmeldung:
**15.09.2021   Patentblatt 2021/37**

(73) Patentinhaber:
• **Carl Zeiss Industrielle Messtechnik GmbH**
  **73447 Oberkochen (DE)**
• **Carl Zeiss Microscopy GmbH**
  **07745 Jena (DE)**

(72) Erfinder:
• **STOPPE, Lars**
  **07743 Jena (DE)**
• **MILDE, Thomas**
  **07616 Nausnitz (DE)**

(74) Vertreter: **Witte, Weller & Partner Patentanwälte mbB**
**Postfach 10 54 62**
**70047 Stuttgart (DE)**

(56) Entgegenhaltungen:
**CN-A- 108 154 491      US-A- 6 088 612**
**US-A1- 2013 089 255      US-A1- 2017 024 859**

EP 3 877 945 B1

**Beschreibung**

Die vorliegende Erfindung betrifft allgemein ein Verfahren zum Inspizieren einer Objektoberfläche gemäß dem Oberbegriff von Anspruch 1 und insbesondere ein Verfahren zum Inspizieren der Oberfläche eines Pulverbettes mit einer Vielzahl von Pulverpartikeln.

Die Erfindung betrifft ferner eine Vorrichtung zum Inspizieren einer Objektoberfläche gemäß dem Oberbegriff von Anspruch 10 und insbesondere eine Vorrichtung zum Inspizieren der Oberfläche eines Pulverbettes mit einer Vielzahl von Pulverpartikeln.

Ein solches Verfahren und eine solche Vorrichtung sind allgemein in US 6,088,612 offenbart, wobei es in diesem Fall um die Eliminierung von Blendungen in Kamerabildern eines Gebärmutterhalses bei der medizinischen Krebserkennung geht.

CN 108 154 491 A offenbart ein Verfahren zum Eliminieren von Reflexionen in Kamerabildern für Anwendungen auf dem Gebiet des maschinellen Sehens. Dabei wird ein Objekt mehrfach unter verschiedenen Beleuchtungen aufgenommen und die aufgenommenen Bilder werden fusioniert.

US 2013/0089255 A1 offenbart ein Verfahren und eine Vorrichtung zum Erzeugen eines Bildes, das den Eindruck eines Siegels erweckt. In diesem Fall wird die Oberfläche eines Siegels aus mehreren Richtungen beleuchtet und es werden mehrere Bilder mit den unterschiedlichen Beleuchtungen aufgenommen und miteinander kombiniert.

DE 10 2015 208 080 A1 offenbart ein Verfahren zur Reflexionskorrektur in einem Objektbild. Vorzugsweise wird das bekannte Verfahren im Zusammenhang mit digitalen mikroskopischen Bildern und entsprechenden Vorrichtungen verwendet. Das Objekt wird mit mindestens zwei verschiedenen Beleuchtungsmustern beleuchtet, wobei die verschiedenen Beleuchtungsmuster insbesondere Beleuchtungen aus verschiedenen Richtungen beinhalten. Anschließend wird eine Differenz zwischen korrespondierenden Pixelwerten von jeweils zwei Bildern bestimmt. Da das eigentliche Objekt unverändert bleibt, während sich Lichtreflexe an der Oberfläche des Objekts hingegen bei Beleuchtung aus unterschiedlichen Richtungen verändern, kann man auf diese Weise ein reflexionskorrigiertes Bild bestimmen. Anschließend kann man individuelle Eigenschaften der Objektoberfläche unter Verwendung des reflexionskorrigierten Bildes besser bestimmen, als ohne Reflexionskorrektur.

Dieses bekannte Verfahren eignet sich grundsätzlich zum Inspizieren der Oberfläche eines Pulverbettes, wie es in Verfahren zur additiven Herstellung von Werkstücken, verwendet wird, auch wenn DE 10 2015 208 080 A1 keinen Hinweis auf eine solche Anwendung enthält. Additive Verfahren zur Herstellung von Werkstücken werden zum Teil als 3D-Druck bezeichnet. Beim sogenannten selektiven Lasersintern (SLS) wird beispielsweise ein Pulverbett mit einer Vielzahl metallischer Pulverpartikel verwendet. Ausgewählte Pulverpartikel in dem Pulverbett werden mithilfe eines Laserstrahls geschmolzen und eine gewünschte Werkstoffstruktur wird so schichtweise hergestellt. Um möglichst homogene Werkstoffschichten zu erhalten und Risse, Poren, Dellen u.a. zu vermeiden, ist es wünschenswert, die Qualität des Pulverbettes vor dem Schmelzen der Pulverpartikel zu inspizieren. Eine Schwierigkeit hierbei sind zahlreiche Reflektionen und Schattenwürfe, die durch die metallischen Pulverpartikel verursacht werden können.

Das Verfahren aus DE 10 2015 208 080 A1 besitzt in so einem Zusammenhang den Nachteil, dass in dem reflexionskorrigierten Bild Schatten verstärkt sind und dies die Inspektion der Oberfläche erschwert.

DE 10 2015 208 087 A1 offenbart ein weiteres Verfahren zum Erzeugen eines reflexionsreduzierten Bildes von einer Objektoberfläche. Auch in diesem Fall wird die Objektoberfläche aus verschiedenen Richtungen beleuchtet und die verschiedenen Beleuchtungsbilder werden durch Addition oder Subtraktion miteinander verrechnet, um ein korrigiertes Bild von der Objektoberfläche zu erhalten. Das Verfahren benötigt eine recht hohe Anzahl an Beleuchtungsmustern aus mehreren parallelen und orthogonalen Richtungen und beinhaltet zudem das Erstellen von mehreren Farbverlaufsbildern, was recht aufwändig ist.

DE 10 2016 108 079 1 offenbart eine Vorrichtung, die dazu eingerichtet ist, ein Objekt aus mehreren Richtungen zu beleuchten. Um Artefakte aufgrund von Verunreinigungen bei der winkelselektiven Beleuchtung zu reduzieren, wird das Leuchtfeld jeder Beleuchtungsanordnung mithilfe eines Filters aufgeweitet. Zum Inspizieren einer Objektoberfläche mit starken Reflexionen und Schattenwürfen, wie etwa der Oberfläche eines metallischen Pulverbettes, sind die vorgenannten Verfahren nicht optimal.

Vor diesem Hintergrund ist es eine Aufgabe der vorliegenden Erfindung, ein Verfahren und eine Vorrichtung der eingangs genannten Art anzugeben, die die Inspektion einer Objektoberfläche mit einer Vielzahl von Reflexen und Schatten erleichtern. Es ist insbesondere eine Aufgabe der Erfindung, ein Verfahren und eine Vorrichtung anzugeben, die die Inspektion der Oberfläche eines Objekts mit einer Vielzahl metallischer Pulverpartikel in einem Pulverbett ermöglichen.

Gemäß einem ersten Aspekt der Erfindung wird diese Aufgabe durch ein Verfahren gemäß Anspruch 1 gelöst.

Gemäß einem weiteren Aspekt wird diese Aufgabe durch eine Vorrichtung gemäß Anspruch 10 gelöst.

Das neue Verfahren und die entsprechende Vorrichtung basieren auf der Idee, mehrere Bilder von der Objektoberfläche, die aus verschiedenen Richtungen beleuchtet wurde, miteinander zu verrechnen, um ein reflexionskorrigiertes und ein schattenkorrigiertes Bild von der Objektoberfläche zu erhalten. Das jeweilige korrigierte Bild soll also reduzierte Lichtreflexe bzw. reduzierte Schatten aufweisen, so dass die tatsächliche Objektoberfläche mit ihren individuellen Eigenschaften besser zu sehen ist und dementsprechend genauer inspiziert werden kann.

Beispielsweise können mithilfe des neuen Verfahrens und der neuen Vorrichtung strukturschwache Unebenheiten der Objektoberfläche, kleine Dellen und/oder eine ungleichmäßige Verteilung von Korngrößen leichter erkannt werden. Dadurch, dass die weiteren Pixelwerte in Abhängigkeit davon, ob sie in dem definierten ersten Helligkeitswertebereich liegen oder nicht, zum Bestimmen der korrigierten Pixelwerte verwendet werden, lässt sich die Verstärkung von Schatten bei der rechnerischen Korrektur von Reflexionen oder umgekehrt die Verstärkung von Lichtreflexen bei der rechnerischen Korrektur von Schatten reduzieren. Insbesondere können die weiteren Pixelwerte in Abhängigkeit davon, ob sie in dem ersten Helligkeitswertebereich liegen oder nicht, selektiv für die Berechnung von Differenzen von Pixelwerten verwendet werden. Sehr dunkle Schattenpixel können auf diese Weise bei der Korrektur von Lichtreflexen unberücksichtigt bleiben oder zumindest weniger stark gewichtet werden. Beispielsweise soll ein Pixelwert in dem weiteren Bild daher eine Mindesthelligkeit besitzen, wenn dieser Pixelwert zur rechnerischen Korrektur von Lichtreflexen verwendet werden soll, um eine übermäßige Verstärkung der Schatten in dem korrigierten Bild zu verhindern. Umgekehrt soll ein Pixel in dem weiteren Bild einen Pixelwert aufweisen, der unterhalb eines definierten Helligkeitsschwellenwertes liegt, wenn dieses Pixel zum Bestimmen eines schattenkorrigierten Bildes verwendet werden soll.

In einigen vorteilhaften Ausführungsbeispielen werden jeweils paarweise Differenzen zwischen den ersten Pixelwerten und den weiteren Pixelwerten bestimmt. Es ist aber auch möglich, Differenzen gruppenweise zu bilden, wie zum Beispiel zwischen Gruppen von ersten und zweiten Pixelwerten oder zwischen jeweils einem ersten Pixelwert und mehreren weiteren Pixelwerten.

Wie weiter unten ausgeführt wird, kann die Berücksichtigung der weiteren Pixelwerte bei der Bestimmung der korrigierten Pixelwerte vorteilhaft mithilfe einer Gewichtsfunktion implementiert werden, die einen zur Korrektur geeigneten Helligkeitswertebereich definiert.

Das neue Verfahren und die entsprechende Vorrichtung eignen sich daher besonders gut, um die Oberfläche eines Objekts zu inspizieren, das eine Vielzahl reflektierender und/oder schattenbildender Strukturen aufweist, wie etwa die Oberfläche eines zu einem Pulverbett aufgehäuften Metallpulvers. Das neue Verfahren und die entsprechende Vorrichtung sind darauf jedoch nicht beschränkt und können gleichermaßen auch zum Inspizieren von anderen Objektoberflächen verwendet werden, wie etwa reflektierenden und/oder teilreflektierenden Festkörperoberflächen und/oder Oberflächen mit ortsvariabler Lichtabsorption. Die oben genannte Aufgabe ist daher vollständig gelöst.

In einer Ausgestaltung der Erfindung beinhaltet das Aufnehmen von zumindest einem weiteren Bild von der Objektoberfläche das Aufnehmen einer Vielzahl von weiteren Bildern, wobei die Vielzahl der weiteren Bilder jeweils mit einer anderen Beleuchtung der Objektoberfläche aufgenommen werden, und wobei die ersten korrigierten Pixelwerte in Abhängigkeit von der Vielzahl von weiteren Bildern bestimmt werden.

In einem Ausführungsbeispiel dieser Ausgestaltung werden zwei weitere Bilder von der Objektoberfläche aufgenommen und die Objektoberfläche wird bei der Aufnahme des ersten Bildes und bei der Aufnahme der zwei weiteren Bilder aus drei parallel zueinander versetzten Richtungen beleuchtet. In einem bevorzugten Ausführungsbeispiel wird die Objektoberfläche aus vier verschiedenen "Hauptrichtungen" beleuchtet, von denen jeweils zwei Hauptrichtungen entgegengesetzt zueinander liegen und die jeweils anderen zwei Hauptrichtungen orthogonal dazu. Mit anderen Worten wird die Objektoberfläche in diesem Ausführungsbeispiel aus vier umfänglich verteilten Hauptrichtungen beleuchtet. Innerhalb jeder Hauptrichtung wird die Beleuchtung in zumindest drei "Teilrichtungen" unterteilt, wobei die Teilrichtungen einer Hauptrichtung parallel zueinander liegen. In diesem Ausführungsbeispiel wird die Objektoberfläche also aus zwölf Beleuchtungsrichtungen beleuchtet, von denen jeweils drei parallel versetzt zueinander liegen und entweder orthogonal oder entgegengesetzt zu den anderen Beleuchtungsrichtungen sind. Ein solches Ausführungsbeispiel ist besonders vorteilhaft zum Inspizieren einer Objektoberfläche, von der man erwartet, dass sie weitgehend homogen in Bezug auf alle Beleuchtungsrichtungen erscheint. Zum Inspizieren von Objektoberflächen, bei denen man eine Inhomogenität bzw. definierte Eigenschaften in einer oder mehreren Vorzugsrichtungen erwartet, kann es hingegen vorteilhaft sein, die erste Beleuchtungsrichtung und die Vielzahl der weiteren Beleuchtungsrichtungen in Abhängigkeit von der Vorzugsrichtung und/oder der erwarteten Inhomogenität zu verteilen.

Die bevorzugte Ausgestaltung besitzt in allen Ausführungsbeispielen den Vorteil, dass Reflexe und/oder Schatten sehr weiträumig reduziert werden können. Zugleich lässt sich die rechnerische Erzeugung von künstlichen Artefakten in dem korrigierten Bild minimieren. Infolgedessen ermöglicht diese Ausgestaltung eine sehr genaue Inspektion der wahren Objektoberfläche.

In einer weiteren Ausgestaltung wird ein weiterer Schwellenwert bereitgestellt, der den ersten Helligkeitswertebereich definiert.

In dieser Ausgestaltung ist der o.g. Helligkeitswertebereich durch ein zweiseitig begrenztes Intervall von Helligkeitswerten definiert, die alle größer Null sind und alle auch unterhalb des maximalen Helligkeitswertes liegen, den der verwendete Kamerasensor erfassen kann. Mit anderen Worten wird in dieser Ausgestaltung ein zweiseitig begrenztes Intervall von Helligkeitswerten aus dem maximal vom Kamerasensor zur Verfügung gestellten Dynamikbereich ausgewählt, um durch Bildung von Differenzen zwischen korrespondierenden Pixelwerten im ersten Bild und den weiteren Bildern ein schatten- bzw. reflexkorrigiertes Bild zu bestimmen. Die Ausgestaltung ist vorteilhaft, wenn sowohl Schatten als auch Reflexe in einem korrigierten Bild minimiert sein sollen.

In einer weiteren Ausgestaltung wird eine Gewichtsfunktion bestimmt, die repräsentiert, ob ein ausgewählter weiterer Pixelwert in dem ersten Helligkeitswertebereich liegt oder nicht, und die Differenzen zwischen den ersten Pixelwerten und den weiteren Pixelwerten werden mit der Gewichtsfunktion gewichtet, um die korrigierten Pixelwerte zu bestimmen.

Diese Ausgestaltung ermöglicht eine sehr effiziente Implementierung des neuen Verfahrens und der neuen Vorrichtung. Darüber hinaus ermöglicht diese Ausgestaltung einen "gleitenden Übergang" zwischen Pixelwerten, die zur Bestimmung des korrigierten Bildes verwendet werden, um solchen, die zur Bestimmung des korrigierten Bildes unberücksichtigt bleiben sollen. Dies trägt dazu bei, künstliche Artefakte in dem korrigierten Bild zu reduzieren. Besonders vorteilhaft ist es, wenn die Gewichtsfunktion stetige und differenzierbare Flanken aufweist, die den Helligkeitswertebereich definieren, da hierdurch ein "weicher" Übergang bei der Auswahl der zur Bestimmung des korrigierten Bildes verwendeten Pixel erreicht wird.

In einer weiteren Ausgestaltung wird ein maximaler Helligkeitswert über alle ersten und weiteren Pixelwerte bestimmt, und der erste Helligkeitswertebereich wird relativ zu dem maximalen Helligkeitswert definiert. Vorzugsweise wird auch der zweite Helligkeitswertebereich, sofern verwendet, relativ zu dem maximalen Helligkeitswert definiert.

In dieser Ausgestaltung werden die Pixelwerte aus dem ersten Bild und aus den weiteren Bildern auf einen über alle Pixelwerte bestimmten Maximalwert normiert. Diese Ausgestaltung ermöglicht eine effiziente Implementierung des neuen Verfahrens und der neuen Vorrichtung, da der Helligkeitswertebereich sehr einfach in Bruchteilen, wie etwa Prozentangaben, definiert werden kann..

In einer weiteren Ausgestaltung wird ein minimaler Reflexhelligkeitswert über alle ersten und weiteren Pixelwerte bestimmt, und der erste Schwellenwert liegt unter dem minimalen Reflexhelligkeitswert.

In dieser Ausgestaltung werden zur Bestimmung des korrigierten Bildes im Wesentlichen diejenigen weiteren Pixelwerte ausgewählt, deren Helligkeit unterhalb des definierten Reflexhelligkeitswertes liegt. In dieser Ausgestaltung wird die Verstärkung von Reflexen bei der Bestimmung eines schattenkorrigierten Bildes auf sehr effiziente Weise begrenzt, indem besonders helle und insbesondere übersteuerte Pixel aus der Korrekturrechnung ausgeschlossen werden.

In einer weiteren Ausgestaltung beinhaltet die zumindest eine weitere Richtung eine zweite Richtung, die weitgehend parallel und seitlich versetzt zu der ersten Richtung liegt.

In dieser Ausgestaltung wird die Objektoberfläche aus zumindest zwei Beleuchtungsrichtungen beleuchtet, die im Wesentlichen parallel zueinander liegen. Die Ausgestaltung trägt dazu bei, Lichtreflexe in definierter Weise "seitlich wandern" zu lassen, was eine sehr effiziente Reduktion von Schatten und/oder Reflexen in dem durch Differenzbildung bestimmten Bild ermöglicht. Besonders vorteilhaft ist eine Implementierung mit drei seitlich versetzten, im Wesentlichen parallelen Beleuchtungen, wobei das erste Bild dann einen "rechten Nachbarn" und einen "linken Nachbarn" erhält und Reflexe oder Schattenwürfe durch Differenzbildung der drei Bilder sehr wirkungsvoll minimiert werden können. Die Bezeichnung "rechter Nachbar" verweist in diesem Zusammenhang auf ein weiteres Bild der Objektoberflächen, das mit einer nach rechts versetzten Beleuchtung aufgenommen wurde. Entsprechendes gilt für die Bezeichnung "linker Nachbar".

Alternativ oder ergänzend kann die zumindest eine weitere Richtung eine zweite Richtung beinhalten, die weitgehend orthogonal zu der ersten Richtung liegt. Diese Ausgestaltung besitzt den Vorteil, dass Schattenwürfe und Reflexe an linear ausgedehnten Strukturen wirkungsvoll minimiert werden können.

In einer weiteren Ausgestaltung wird die Objektoberfläche mit Licht beleuchtet, das überwiegend blaue Farbwellenlängen besitzt.

In dieser Ausgestaltung dominieren kurzwellige Lichtanteile aus dem sichtbaren Spektralbereich gegenüber Lichtanteilen im mittleren (grünen) und längeren (roten) Wellenlängenbereich. Die Ausgestaltung besitzt den Vorteil, dass kurzwelliges Licht für ein günstigeres Verhältnis von Reflexion und Streuung sorgt, wenn es auf unterhalb der Wellenlänge mikrostrukturierte Oberflächen trifft, wie dies insbesondere bei Metallpartikeln der Fall ist. Somit ist die Rekonstruktion der wahren Objektoberfläche in dem korrigierten Bild weiter verbessert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Figur 1    eine schematische Darstellung eines Ausführungsbeispiels der neuen Vorrichtung,

Figur 2    ein Flussdiagramm zur Erläuterung eines Ausführungsbeispiels des neuen Verfahrens, und

Figur 3    beispielhafte Gewichtsverläufe, die in einem Verfahren gemäß Fig. 2 Verwendung finden können.

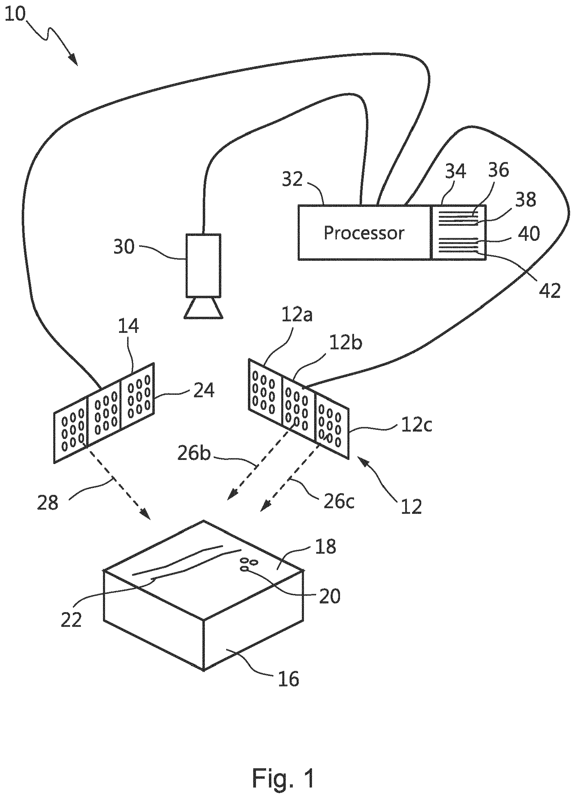

In Fig. 1 ist ein Ausführungsbeispiel der neuen Vorrichtung in seiner Gesamtheit mit der Bezugsziffer 10 bezeichnet. Die Vorrichtung 10 besitzt eine erste Beleuchtungsanordnung 12 und eine zweite Beleuchtungsanordnung 14. Die Beleuchtungsanordnungen 12, 14 sind hier orthogonal zueinander angeordnet und derartig ausgerichtet, dass sie ein Objekt 16 mit einer Objektoberfläche 18 aus zwei orthogonalen Richtungen beleuchten können. Das Objekt 16 ist in diesem Ausführungsbeispiel ein Pulverbett mit einer Vielzahl von Pulverpartikeln 20. Prinzipiell kann die neue Vorrichtung und ein auf der neuen Vorrichtung ausgeführtes Verfahren aber auch zum Inspizieren von anderen Objekten einschließlich Feststoffobjekten verwendet werden.

In dem dargestellten Ausführungsbeispiel kann das Pulverbett 16 Bestandteil einer Vorrichtung zur additiven Fertigung von Werkstücken sein, etwa einer Vorrichtung zum selektiven Lasersintern. Dementsprechend können die Pulverpartikel 20, die in Fig. 1 stark vergrößert dargestellt sind, metallische Pulverpartikel sein. Die Inspektion einer Objektoberfläche 18 mit einer Vielzahl derartiger Pulverpartikel ist aufgrund zahlreicher Reflexionen, die die metallischen Pulverpartikel in unterschiedlichen Richtungen erzeugen können, eine große Herausforderung.

Gerade im Zusammenhang mit der additiven Fertigung von Werkstücken unter Verwendung eines Pulverbettes ist es von Interesse, die Objektoberfläche 18 effizient und möglichst genau zu inspizieren, um insbesondere Unebenheiten, Löcher, Dellen, Rakelstrukturen oder andere Inhomogenität vor dem Aufschmelzen der Pulverpartikel 20 zu erkennen. Vereinfacht sind bei der Bezugsziffer 22 zwei Unebenheiten in der Objektoberfläche 18 dargestellt.

In einem bevorzugten Ausführungsbeispiel besitzt die Vorrichtung 10 zwei weitere Beleuchtungsanordnungen (hier nicht dargestellt), von denen eine gegenüber der Beleuchtungsanordnung 12 und eine weitere gegenüber der Beleuchtungsanordnung 14 angeordnet ist. In diesen Ausführungsbeispielen ist die Vorrichtung 10 somit in der Lage, das Objekt 16 aus vier verschiedenen Hauptrichtungen zu beleuchten, was eine besonders detailgetreue Rekonstruktion der Objektoberfläche 18 ermöglicht.

Alternativ oder ergänzend zu der in Fig. 1 dargestellten Anordnung könnte die Vorrichtung 10 in weiteren Ausführungsbeispielen ein Ringlicht mit einer Vielzahl von einzeln und/oder segmentweise ansteuerbaren Lichtquellen besitzen, wobei das Ringlicht (hier nicht dargestellt) beispielsweise oberhalb von der Objektoberfläche 18 und vorzugsweise um das Objekt 16 herum angeordnet ist, um ebenfalls eine Beleuchtung der Objektoberfläche 18 aus verschiedenen Richtungen zu ermöglichen. Darüber hinaus könnte die erste Beleuchtungsanordnung 12 prinzipiell beweglich relativ zu dem Objekt 16 angeordnet sein, um eine Beleuchtung des Objekts 16 aus verschiedenen Richtungen zu realisieren. Beispielsweise könnte das Objekt 16 auf einem Drehtisch angeordnet sein. Dementsprechend können die erste und die zweite Beleuchtungsanordnung 12, 14 im Sinne der vorliegenden Beschreibung auch durch eine einzelne Lichtquelle realisiert sein (identisch sein), die relativ zu der Objektoberfläche beweglich ist.

Die Beleuchtungsanordnungen 12, 14 in den in Fig. 1 dargestellten Ausführungsbeispielen (sowie etwaige weitere Beleuchtungsanordnungen entsprechend der vorgenannten Beschreibung) besitzen hier jeweils eine Vielzahl von Lichtquellen 24, die einzeln und/oder segmentweise ein- und ausgeschaltet werden können. In einem bevorzugten Ausführungsbeispiel sind die Lichtquellen LEDs, die segmentweise ein- und ausgeschaltet werden. Drei so definierte Segmente der Beleuchtungsanordnung 12 sind in Fig. 1 mit den Bezugsziffern 12a, 12b, 12c bezeichnet.

Die Segmente 12a, 12b, 12c stellen seitlich versetzte Beleuchtungsrichtungen zur Verfügung, von denen in Fig. 1 beispielhaft zwei versetzte Beleuchtungsrichtungen 26b, 26c bezeichnet sind. Die Beleuchtungsrichtungen 26b, 26c bilden somit voneinander verschiedene Beleuchtungsrichtungen, die aus einer gemeinsamen Hauptrichtung kommen. Demgegenüber liegt die weitere Beleuchtungsrichtung 28, die mithilfe der Beleuchtungsanordnung 14 (genauer gesagt mithilfe eines Segments der Beleuchtungsanordnung 14) erzeugt wird, quer zu den Beleuchtungsrichtungen 26b, 26c. In bevorzugten Ausführungsbeispielen sind die Beleuchtungsrichtungen der Beleuchtungsanordnungen 12, 14 orthogonal zueinander, während die "Teilbeleuchtungsrichtungen" 26b, 26c der jeweils einzeln schaltbaren Segmente einer Beleuchtungsanordnung parallel zueinander liegen. Prinzipiell können die Beleuchtungsrichtungen auch schräg zueinander liegen.

Die Vorrichtung 10 besitzt des Weiteren eine Kamera 30, die hier über der Objektoberfläche 18 angeordnet ist. Die Kamera 30 ist dazu eingerichtet, mehrere Bilder von der Objektoberfläche 18 aufzunehmen, während die Objektoberfläche 18 aus den unterschiedlichen Richtungen 26b, 26c, 28 beleuchtet wird.

Mit der Bezugsziffer 32 ist eine Auswerte- und Steuereinheit bezeichnet, die hier die Kamera 30 und die Beleuchtungsanordnungen 12, 14 (und ggf. weitere Beleuchtungsanordnungen) steuert. Des Weiteren ist die Auswerte- und Steuereinheit 32 dazu eingerichtet, ein erstes korrigiertes Bild von der Objektoberfläche 18 unter Verwendung der aufgenommenen Bilder zu bestimmen, indem hier korrespondierende Pixelwerte in den Bildern mit unterschiedlichen Beleuchtungen paarweise voneinander subtrahiert werden.

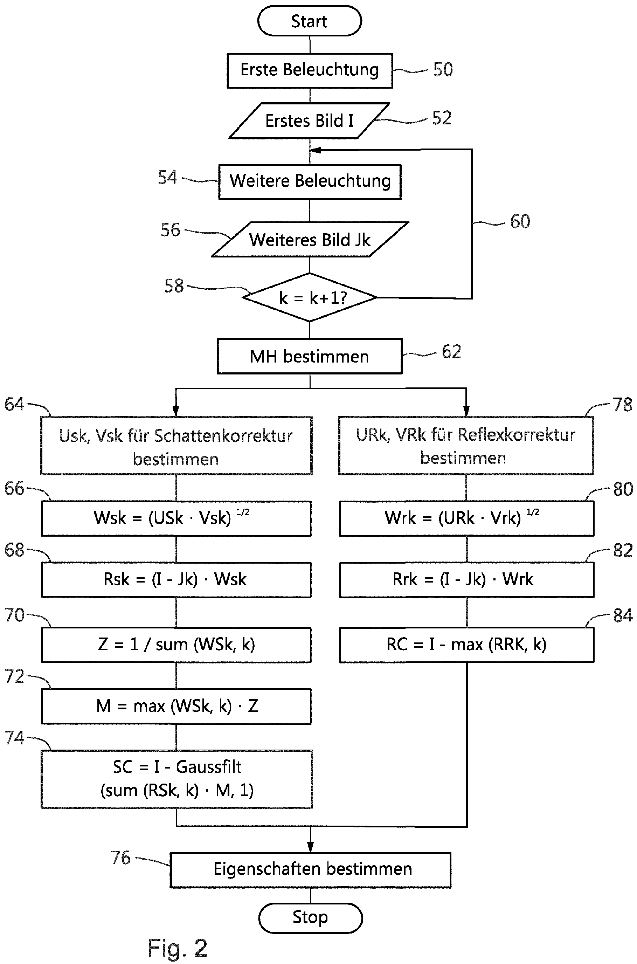

In bevorzugten Ausführungsbeispielen werden jeweils Pixelwertpaare subtrahiert, die jeweils gleiche Oberflächenpunkte der Objektoberfläche 18 repräsentieren. Insbesondere können diejenigen Pixelwerte, die ein definiertes Kamerapixel in den verschiedenen Bildern liefert, voneinander subtrahiert werden, um ein reflexionskorrigiertes und/oder schattenkorrigiertes Bild von der Objektoberfläche 18 zu erhalten. Vorzugsweise wird für eine Vielzahl von Bildpixeln, die die Kamera 30 liefert, jeweils paarweise eine Differenz der Pixelwerte in den verschieden beleuchteten Bildern berechnet, wie dies nachfolgend anhand Fig. 2 für ein bevorzugtes Ausführungsbeispiel dargestellt ist.

Wie unter Bezugnahme auf Fig. 2 erläutert wird, bildet die Auswerte- und Steuereinheit 32 nicht für alle Pixelpaare in den aufgenommenen Bildern eine Differenz. Vielmehr werden die weiteren Pixelwerte in Abhängigkeit davon, ob sie in einem definierten Helligkeitswertebereich liegen, für eine Differenzbildung verwendet. Mit anderen Worten werden nur ausgewählte Pixelwerte zum Bestimmen des korrigierten Bildes verwendet. Dementsprechend besitzt die Vorrichtung 10 in dem Ausführungsbeispiel der Fig. 1 einen Speicher 34, in dem hier vier Schwellenwerte 36, 38, 40, 42 bereitgestellt sind. Die Schwellenwerte 36, 38 definieren hier einen ersten Helligkeitswertebereich. Die Schwellenwerte 40, 42 definieren einen zweiten Helligkeitswertebereich. Die Pixelwerte der aufgenommenen Bilder werden jeweils in Abhängigkeit davon, ob sie in dem ersten Helligkeitswertebereich und/oder in dem zweiten Helligkeitswertebereich liegen, verwendet, um ein erstes korrigiertes Bild und, wie nachfolgend erläutert wird, ein zweites korrigiertes Bild von der Objektoberfläche 18 zu bestimmen. Vorteilhaft ist das erste korrigierte Bild ein schattenkorrigiertes Bild und das zweite korrigierte Bild ist ein reflexkorrigiertes Bild oder umgekehrt.

In einem Ausführungsbeispiel des neuen Verfahrens wird die Objektoberfläche 18 mit kurzwelligem Licht beleuchtet. Dementsprechend besitzen die Beleuchtungsanordnungen 12, 14 hier vorwiegend bläulich leuchtende Lichtquellen. Gemäß Schritt 50 wird die Objektoberfläche 18 aus einer ersten Richtung beleuchtet. Die erste Richtung kann beispielsweise die Beleuchtungsrichtung 26b gemäß Fig. 1 sein. Mithilfe der Kamera 30 wird gemäß Schritt 52 ein erstes Bild I aufgenommen. Anschließend wird die Objektoberfläche 18 gemäß Schritt 54 aus einer weiteren Richtung beleuchtet, beispielsweise aus der Beleuchtungsrichtung 26c gemäß Fig. 1. Mithilfe der Kamera 30 wird ein weiteres Bild $J_k$ von der Objektoberfläche 18 aufgenommen, während die Objektoberfläche 18 aus der weiteren Richtung 26c beleuchtet wird. Gemäß Schritt 58 erfolgt hier dann eine Entscheidung, ob noch weitere Bilder von der Objektoberfläche 18 mit Beleuchtungen aus weiteren Richtungen aufgenommen werden sollen, etwa aus der Beleuchtungsrichtung 28 gemäß Fig. 1. Ggf. springt das Verfahren gemäß Schleife 60 zu Schritt 54 zurück. In den bevorzugten Ausführungsbeispielen werden zumindest zwei weitere Bilder $J_1$ und $J_2$ aufgenommen, wenngleich eine höhere Anzahl k an weiteren Bildern $J_k$ vorteilhaft sein kann.

Nach der Aufnahme aller gewünschten Bilder I, $J_k$ wird in Schritt 62 ein maximaler Helligkeitswert MH über alle Pixelwerte der aufgenommen Bilder I, $J_k$ bestimmt. Der maximale Helligkeitswert MH wird nachfolgend bei der Bestimmung eines schattenkorrigierten bzw. reflexkorrigierten Bildes von der Objektoberfläche 18 vorteilhaft verwendet, um die Pixelwerte in den Bildern I, $J_k$ als relative Helligkeiten, beispielsweise zwischen 0 und 1, betrachten zu können. In anderen Ausführungsbeispielen kann Schritt 62 entfallen und die Pixelwerte der Bilder I, $J_k$ können als absolute Werte verwendet werden.

In dem Ausführungsbeispiel gemäß Fig. 2 wird in den Schritten 64 bis 74 ein schattenkorrigiertes Bild SC von der Objektoberfläche 18 bestimmt, während in den Schritten 78 bis 84 ein reflexkorrigiertes Bild RC von der Objektoberfläche 18 bestimmt wird. Die Schritte 64 bis 74 und die Schritte 78 bis 84 sind in Fig. 2 parallel zueinander dargestellt und können prinzipiell parallel zueinander ausgeführt werden, wenn die Auswerte- und Steuereinheit 32 eine entsprechende Parallelverarbeitung ermöglicht. Alternativ hierzu können die Schritte 64 bis 74 einerseits und die Schritte 78 bis 84 andererseits nacheinander ausgeführt werden.

Gemäß Schritt 64 werden ein erster Indikatorwert $US_k$ und ein zweiter Indikatorwert $VS_k$ bestimmt. Vorteilhaft kann der Indikatorwert $US_k$ folgendermaßen bestimmt werden:

$$US_k = 1(I - J_k \leq 0) \cdot 1(J_k - I \leq MH \cdot 0.1) \cdot (J_k - I)/0.1/MH + 1(J_k - I > 0.1 \cdot MH),$$

wobei die Funktion 1 (...) den Wert 1 liefert, wenn die in der Klammer angegebene Bedingung erfüllt ist, und den Wert 0 liefert, wenn die Bedingung in der Klammer nicht erfüllt ist. Der Indikatorwert $US_k$ wird für alle korrespondierenden Pixelpaare der Bilder I, $J_k$, die bei der Bestimmung des schattenkorrigierten Bildes SC ausgewertet werden sollen, bestimmt und besitzt den Wert 1, wenn ein betrachtetes Pixel in einem Bild $J_k$ um mehr als 10 % heller ist als das entsprechende Pixel in dem Bild I. Der Prozentwert bezieht sich dabei auf den maximalen Helligkeitswert MH und er bildet einen Schwellenwert, der eine Grenze eines Helligkeitswertebereichs definiert.

Der hier angenommene Schwellenwert in der Größe von 10 % ist beispielhaft und kann in anderen Ausführungsbeispielen kleiner oder größer gewählt werden. Für relative Helligkeiten eines betrachteten Pixels in dem Bild $J_k$ zwischen 0 und dem angenommenen Schwellenwert wird durch die obige Formel ein stetiger Übergang realisiert. Grob gesagt signalisiert der Indikatorwert $US_k$ mit dem Wert 1, wenn ein betrachtetes Pixel in einem Bild $J_k$ heller ist als das entsprechende Pixel in dem ersten Bild I, wobei aufgrund des Schwellenwertes von 10 % gewährleistet ist, dass jeweils ein "deutlicher" Unterschied in der Helligkeit zwischen den betrachteten Bildpixeln besteht.

Der zweite Indikatorwert $VS_k$ wird vorteilhaft folgendermaßen berechnet:

$$VS_k = 1(0.1 \leq BL-J_k/MH) + 1(0.1 > BL-J_k/MH) \cdot 1(J_k/MH \leq BL) \cdot (1+((BL-0.1) - J_k/MH)/0.1),$$

wobei BL (bright limit) einen weiteren Schwellenwert definiert. Der Indikatorwert $VS_k$ besitzt den Wert 1, wenn das betrachtete Pixel in dem Bild $J_k$ einen relativen Helligkeitswert zwischen mindestens 0 und einem Maximalwert besitzt, der hier beispielsweise 10 % von MH unterhalb des Schwellenwerts BL . MH liegt. Auch hier wird im Übergang zu dem oberen Schwellenwert BL vorteilhaft eine stetige Verbindung realisiert. Grob gesagt nimmt der Indikatorwert $VS_k$ den Wert 1 an, wenn der Pixelwert eines betrachteten Pixels in einem Bild $J_k$ zwischen 0 und dem oberen Schwellenwert definiert durch BL liegt.

Gemäß Schritt 66 wird ein kombinierter Indikatorwert $WS_k$ gemäß folgender Formel

$$WS_k = (US_k \cdot VS_k)^{1/2}$$

aus den zuvor genannten Indikatorwerten bestimmt. Der kombinierte Indikatorwert $WS_k$ verhindert, dass ein betrachtetes Pixel in einem Bild $J_k$ in die weitere Rechnung einbezogen wird, wenn es zu hell oder zu dunkel ist. Der Exponent ½ repräsentiert hier eine Quadratwurzeloperation, die sich in einem Ausführungsbeispiel bei der Inspektion eines Metallpulvers als vorteilhaft gezeigt hat. Das Produkt kann prinzipiell aber auch ohne weitere Operation bestehen bleiben oder mit anderen Exponenten $p<1$ potenziert werden. Es kann darüber hinaus Anwendungen geben, bei denen Exponenten $p>1$ besser sind. Je nachdem ob der Exponent $p>1$ ist, wird ein Verlauf mit Werten nahe Null geglättet, oder bei Exponenten $p<1$ wird ein Verlauf mit Werten nahe 1 geglättet. Es ist also applikativ ein Exponent $p>0$ möglich. Besonders vorteilhaft ist ein Exponent $0<p\leq1$.

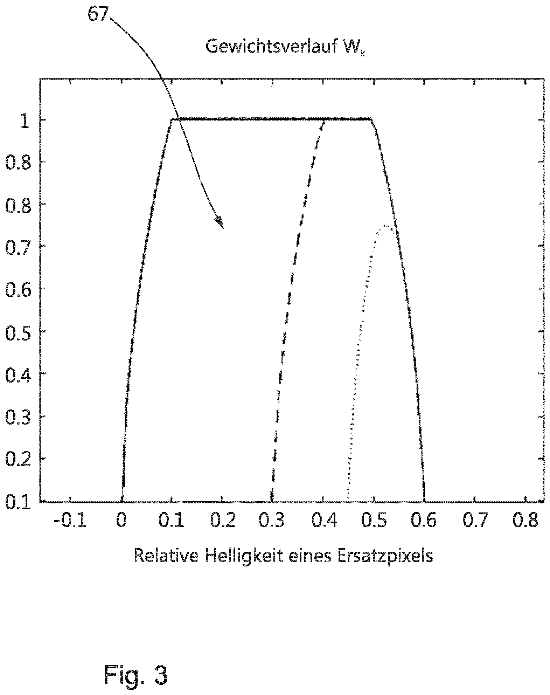

Fig. 3 zeigt beispielhaft drei verschiedene Gewichtsverläufe des kombinierten Indikatorwertes $WS_k$, wobei hier der obere Schwellenwert durch BL = 0,6 definiert wurde. Die durchgezogene Linie zeigt den Gewichtsverlauf für den Fall, dass das betrachtete Pixel in dem ersten Bild I schwarz ist, also den Pixelwert 0 besitzt. Die gestrichelte Linie zeigt den Fall, dass das betrachtete Pixel in dem ersten Bild I einen relativen Helligkeitswert von 0,3 besitzt. Die gepunktete Linie zeigt den Fall, dass das betrachtete Pixel in dem ersten Bild I einen relativen Helligkeitswert von 0,45 besitzt. Wie man anhand Fig. 3 erkennen kann, definiert der kombinierte Indikatorwert $WS_k$ einen Helligkeitswertebereich 67, der hier relativ zu dem maximalen Helligkeitswert MH in Prozent angegeben ist.

Gemäß Schritt 68 wird nun für alle betrachteten Pixelpaare in den Bildern I und $J_k$ eine Differenz $RS_k$ gebildet, wobei diese Differenz mit dem kombinierten Indikatorwert $WS_k$ gemäß nachfolgender Formel gewichtet wird

$$RS_k = (I-J_k) \cdot WS_k$$

Die Differenzwerte $RS_k$ bilden jeweils einen Korrekturvektor für ein Pixel im ersten Bild, der mit dem kombinierten Indikatorwert $WS_k$ gewichtet ist.

In bevorzugten Ausführungsbeispielen werden die Korrekturvektoren $RS_k$ gemittelt, um ein schattenkorrigiertes Bild SC zu bestimmen. Aus diesem Grund wird im Schritt 70 ein Faktor Z gemäß folgender Formel bestimmt:

$$Z = 1/\text{sum}(WS_k, k).$$

Die Mittelung der Korrekturvektoren erfolgt hier vorteilhaft mithilfe der Summe der kombinierten Indikatorwerte $WS_k$. Gemäß Schritt 72 wird vorteilhaft ein Dämpfungsfaktor in der Form des maximalen kombinierten Indikatorwertes über alle kombinierten Indikatorwerte $WS_k$ bestimmt, d.h.

$$M=\max(WS_k, k)$$

Gemäß Schritt 74 wird dann ein schattenkorrigiertes Bild gemäß folgender Formel bestimmt:

$$SC = I-\text{Gaussfilt}(\text{sum}(RS_k, k) \cdot M, 1).$$

Hierbei bezeichnet die Funktion Gaussfilt(..., 1) ein Gaussfilter mit einer Standardabweichung, die hier beispielsweise mit 1 angenommen ist. Prinzipiell könnte der Wert für die Standardabweichung abweichend gewählt werden.

Dementsprechend wird im Schritt 74 ein schattenkorrigiertes Bild bestimmt, indem eine Differenz zwischen

EP 3 877 945 B1

den Pixelwerten im ersten Bild I und korrespondierenden Pixelwerten in einem gewichteten und gefilterten Korrekturbild bestimmt wird. Das Korrekturbild ergibt sich hier aus der Gauss-gefilterten Summe aller Korrekturvektoren, wobei die Korrekturvektoren wiederum mit dem kombinierten Indikatorwert $WS_k$ gewichtet sind. Durch den Schwellenwert BL wird erreicht, dass sich die Reflexe in den Bildern I, $J_k$ bei der Bestimmung des schattenkorrigierten Bildes SC nicht in unerwünschter Weise aufaddieren. Die Filterung im abschließenden Schritt 74 vermeidet oder verringert künstliche Artefakte. Durch die Multiplikation der summierten Korrekturvektoren mit dem Maximum des kombinierten Indikatorwertes gemäß Schritt 72 werden sprunghafte Änderungen der summierten Korrektur weitgehend vermieden.

Gemäß Schritt 76 werden individuelle Eigenschaften der Oberfläche 18, wie etwa die Unebenheiten 22, individuelle Partikelgrößen der Pulverpartikel 20 und/oder die Homogenität der Verteilung der Pulverpartikel 20 bestimmt.

Die Bestimmung eines reflexkorrigierten Bildes erfolgt auf ähnliche Weise, wobei in Schritt 78 zunächst ein Indikatorwert $UR_k$ gemäß folgender Formel berechnet wird:

$$UR_k = 1(J_k - I \leq 0) \cdot 1(I - J_k \leq MH \cdot 0.1) \cdot (I - J_k)/0.1/MH + 1(I - J_k > 0.1 \cdot MH).$$

Demnach geht ein betrachtetes Pixel in den Bildern $J_k$ in die Korrektur des ersten Bildes I ein, wenn sein Helligkeitswert dunkler ist als der Helligkeitswert des korrespondierenden Pixels in dem ersten Bild I. Des Weiteren wird in Schritt 78 ein Indikatorwert $VR_k$ gemäß folgender Formel berechnet:

$$VR_k = 1(J_k/MH > DL + 0.1) + 1(J_k/MH > DL) \cdot 1(J_k/MH \leq DL + 0.1) \cdot (J_k/MH - DL)/0.1.$$

Das betrachtete Pixel in den Bildern $J_k$ soll eine Mindesthelligkeit besitzen, die hier durch den Schwellenwert DL (dark limit) eingestellt ist.

Mit anderen Worten soll ein betrachtetes Pixel in den Bildern $J_k$ in einem zweiten Helligkeitswertebereich liegen, der gemäß Schritt 80 wiederum mithilfe eines kombinierten Indikatorwertes $WR_k$ definiert wird. Beispielsweise wird der kombinierte Indikatorwert $WR_k$ gemäß folgender Formel berechnet:

$$WR_k = (UR_k \cdot VR_k)^{1/2}.$$

Gemäß Schritt 82 werden die korrespondierenden Pixelwerte in dem ersten Bild I und in den weiteren Bildern $J_k$ für alle k voneinander subtrahiert und mit dem kombinierten Indikatorwert $WR_k$ gewichtet. Mit anderen Worten werden im Schritt 82 Korrekturvektoren $RR_k$ gemäß folgender Formel berechnet:

$$RR_k = (I - J_k) \cdot WR_k.$$

Das reflexkorrigierte Bild wird gemäß Schritt 84 vorteilhaft nach folgender Formel berechnet:

$$RC = I - \max(R_k, k).$$

Mit anderen Worten wird das reflexkorrigierte Bild berechnet, indem das Maximum der Korrekturvektoren $RR_k$ von den Pixelwerten der betrachteten Pixel in dem ersten Bild I subtrahiert wird. Bei der Reflexionskorrektur wird hier - im Unterschied zu der Schattenkorrektur - die maximale Wirkung vorteilhaft verwendet, da Reflexe typischerweise lokal begrenzt und zum Teil sehr stark übersteuert sind. Alternativ kann hier aber auch in entsprechender Weise wie bei der Schattenkorrektur verarbeitet werden, insbesondere mit einem Gaussfilter.

Gemäß Schritt 76 können auch anhand des reflexkorrigierten Bildes individuelle Eigenschaften der Objektoberfläche 18 bestimmt werden.

**Patentansprüche**

1. Verfahren zum Inspizieren einer Objektoberfläche (18), insbesondere zum Inspizieren der Oberfläche eines Pulverbettes mit einer Vielzahl von Pulverpartikeln (20), mit den Schritten

   - Beleuchten (50) der Objektoberfläche (18) aus einer ersten Richtung (26b) und Aufnehmen (52) eines ersten

8

Bildes von der Objektoberfläche (18), wobei das erste Bild eine Vielzahl von ersten Pixelwerten aufweist, die die Objektoberfläche (18) mit der Beleuchtung aus der ersten Richtung (26b) repräsentieren,

- Beleuchten (54) der Objektoberfläche (18) aus zumindest einer weiteren Richtung (26c, 28) und Aufnehmen (56) von zumindest einem weiteren Bild von der Objektoberfläche (18), wobei das zumindest eine weitere Bild eine Vielzahl von weiteren Pixelwerten aufweist, die die Objektoberfläche (18) mit der Beleuchtung aus der entsprechenden weiteren Richtung (26c, 28) repräsentieren,

- Bestimmen (74; 84) eines ersten korrigierten Bildes von der Objektoberfläche (18) unter Verwendung der ersten und der weiteren Pixelwerte, wobei das erste korrigierte Bild eine Vielzahl von ersten korrigierten Pixelwerten besitzt, die die Objektoberfläche (18) repräsentieren, wobei die ersten korrigierten Pixelwerte in Abhängigkeit von ersten Differenzen (68; 82) zwischen den ersten Pixelwerten und den jeweils korrespondierenden weiteren Pixelwerten bestimmt werden,

- Bestimmen (84; 74) eines zweiten korrigierten Bildes von der Objektoberfläche (18) unter Verwendung der ersten und der weiteren Pixelwerte, wobei das zweite korrigierte Bild eine Vielzahl von zweiten korrigierten Pixelwerten besitzt, die in Abhängigkeit von zweiten Differenzen zwischen den ersten Pixelwerten und den jeweils korrespondierenden weiteren Pixelwerten bestimmt (82; 68) werden, und

- Bestimmen (76) von individuellen Eigenschaften der Objektoberfläche (18) unter Verwendung des ersten korrigierten Bildes und unter Verwendung des zweiten korrigierten Bildes,

wobei ein erster Schwellenwert (36) bereitgestellt wird, der einen ersten Helligkeitswertebereich (67) definiert, und wobei die weiteren Pixelwerte in Abhängigkeit davon, ob sie in dem ersten Helligkeitswertebereich (67) liegen oder nicht, verwendet werden, um die ersten korrigierten Pixelwerte zu bestimmen, **dadurch gekennzeichnet, dass** ein zweiter Schwellenwert (40) bereitgestellt wird, der einen zweiten Helligkeitswertebereich definiert, und dass die weiteren Pixelwerte in Abhängigkeit davon, ob sie in dem zweiten Helligkeitswertebereich liegen oder nicht, verwendet werden, um die zweiten korrigierten Pixelwerte zu bestimmen, wobei der erste Schwellenwert (36) und der zweite Schwellenwert (40) verschieden voneinander sind, und wobei das erste korrigierte Bild ein schattenreduziertes Bild von der Objektoberfläche ist (18), während das zweite korrigierte Bild ein reflexkorrigiertes Bild von der Objektoberfläche (18) ist, oder umgekehrt.

2. Verfahren nach Anspruch 1, **dadurch gekennzeichnet, dass** das Aufnehmen (56) von zumindest einem weiteren Bild von der Objektoberfläche (18) das Aufnehmen (60) einer Vielzahl von weiteren Bildern beinhaltet, wobei die Vielzahl der weiteren Bilder jeweils mit einer anderen Beleuchtung der Objektoberfläche (18) aufgenommen werden, und wobei die ersten korrigierten Pixelwerte in Abhängigkeit von der Vielzahl von weiteren Bildern bestimmt (74; 84) werden.

3. Verfahren nach Anspruch 1 oder 2, **dadurch gekennzeichnet, dass** ein weiterer Schwellenwert (38) bereitgestellt wird, der den ersten Helligkeitswertebereich (67) definiert, so dass der erste Helligkeitswertebereich (67) durch ein zweiseitig begrenztes Intervall von Helligkeitswerten definiert ist, die alle größer Null sind und unterhalb eines maximalen Helligkeitswertes liegen, den der verwendete Kamerasensor erfassen kann.

4. Verfahren nach einem der Ansprüche 1 bis 3, **dadurch gekennzeichnet, dass** eine Gewichtsfunktion bestimmt (66; 80) wird, die repräsentiert, ob ein ausgewählter weiterer Pixelwert in dem ersten Helligkeitswertebereich (67) liegt oder nicht, und dass die Differenzen zwischen den ersten Pixelwerten und den weiteren Pixelwerten mit der Gewichtsfunktion gewichtet (68; 82) werden, um die korrigierten Pixelwerte zu bestimmen.

5. Verfahren nach einem der Ansprüche 1 bis 4, **dadurch gekennzeichnet, dass** ein maximaler Helligkeitswert (MH) über alle ersten und weiteren Pixelwerte bestimmt (62) wird, und dass der erste Helligkeitswertebereich (67) relativ zu dem maximalen Helligkeitswert (MH) definiert wird.

6. Verfahren nach einem der Ansprüche 1 bis 5, **dadurch gekennzeichnet, dass** ein minimaler Reflexhelligkeitswert (BL) über alle ersten und weiteren Pixelwerte bestimmt wird, und dass der erste Schwellenwert (36) unter dem minimalen Reflexhelligkeitswert liegt.

7. Verfahren nach einem der Ansprüche 1 bis 6, **dadurch gekennzeichnet, dass** die zumindest eine weitere Richtung eine zweite Richtung (26c) beinhaltet, die weitgehend parallel und seitlich versetzt zu der ersten Richtung (26b) liegt.

8. Verfahren nach einem der Ansprüche 1 bis 6, **dadurch gekennzeichnet, dass** die zumindest eine weitere Richtung eine zweite Richtung (28) beinhaltet, die weitgehend orthogonal zu der ersten Richtung (26b) liegt.

9. Verfahren nach einem der Ansprüche 1 bis 8, **dadurch gekennzeichnet, dass** die Objektoberfläche (18) mit Licht beleuchtet wird, das überwiegend blaue Farbwellenlängen besitzt.

10. Vorrichtung zum Inspizieren einer Objektoberfläche (18), insbesondere zum Inspizieren der Oberfläche eines Pulverbettes mit einer Vielzahl von Pulverpartikeln (20), mit einer ersten Beleuchtungsanordnung (12b), die dazu eingerichtet ist, die Objektoberfläche (18) aus einer ersten Richtung (26b) zu beleuchten, mit einer weiteren Beleuchtungsanordnung (12a, 12c, 14), die dazu eingerichtet ist, die Objektoberfläche (18) aus zumindest einer weiteren Richtung zu beleuchten, mit einer Kamera (30), die dazu eingerichtet ist, ein erstes Bild und zumindest ein weiteres Bild von der Objektoberfläche (18) aufzunehmen, wobei das erste Bild eine Vielzahl von ersten Pixelwerten aufweist, die die Objektoberfläche (18) mit einer Beleuchtung aus der ersten Richtung (26b) repräsentieren, und wobei das zumindest eine weitere Bild eine Vielzahl von weiteren Pixelwerten aufweist, die die Objektoberfläche (18) mit einer Beleuchtung aus der entsprechenden weiteren Richtung (26c, 28) repräsentieren, und mit einer Auswerteeinheit (32), die dazu eingerichtet ist, ein erstes korrigiertes Bild von der Objektoberfläche (18) und ein zweites korrigiertes Bild von der Objektoberfläche (18) unter Verwendung der ersten und der weiteren Pixelwerte zu bestimmen, und die ferner dazu eingerichtet ist, individuelle Eigenschaften der Objektoberfläche (18) unter Verwendung des ersten korrigierten Bildes und des zweiten korrigierten Bildes zu bestimmen, wobei das erste korrigierte Bild eine Vielzahl von ersten korrigierten Pixelwerten besitzt, die die Objektoberfläche (18) repräsentieren, wobei die ersten korrigierten Pixelwerte in Abhängigkeit von ersten Differenzen zwischen den ersten Pixelwerten und den jeweils korrespondierenden weiteren Pixelwerten bestimmt (68; 82) werden, wobei in der Auswerteeinheit (32) ein erster Schwellenwert (36) bereitgestellt ist, der einen ersten Helligkeitswertebereich (67) definiert, und wobei die Auswerteeinheit (32) dazu eingerichtet ist, die weiteren Pixelwerte in Abhängigkeit davon, ob sie in dem ersten Helligkeitswertebereich (67) liegen oder nicht, zu verwenden, um die ersten korrigierten Pixelwerte zu bestimmen, wobei das zweite korrigierte Bild eine Vielzahl von zweiten korrigierten Pixelwerten besitzt, die in Abhängigkeit von zweiten Differenzen zwischen den ersten Pixelwerten und den jeweils korrespondierenden weiteren Pixelwerten bestimmt (82; 68) werden, **dadurch gekennzeichnet, dass** ein zweiter Schwellenwert (40) bereitgestellt ist, der einen zweiten Helligkeitswertebereich definiert, und dass die weiteren Pixelwerte in Abhängigkeit davon, ob sie in dem zweiten Helligkeitswertebereich liegen oder nicht, verwendet werden, um die zweiten korrigierten Pixelwerte zu bestimmen, wobei der erste Schwellenwert (36) und der zweite Schwellenwert (40) verschieden voneinander sind, und wobei das erste korrigierte Bild ein schattenreduziertes Bild von der Objektoberfläche ist (18), während das zweite korrigierte Bild ein reflexkorrigiertes Bild von der Objektoberfläche (18) ist, oder umgekehrt.

## Claims

1. Method for inspecting an object surface (18), in particular for inspecting the surface of a powder bed with a multiplicity of powder particles (20), comprising the steps of

   - illuminating (50) the object surface (18) from a first direction (26b) and recording (52) a first image of the object surface (18), wherein the first image has a multiplicity of first pixel values that represent the object surface (18) with the illumination from the first direction (26b),
   - illuminating (54) the object surface (18) from at least one further direction (26c, 28) and recording (56) at least one further image of the object surface (18), wherein the at least one further image has a multiplicity of further pixel values that represent the object surface (18) with the illumination from the corresponding further direction (26c, 28),
   - determining (74; 84) a first corrected image of the object surface (18) using the first and the further pixel values, wherein the first corrected image has a multiplicity of first corrected pixel values representing the object surface (18), wherein the first corrected pixel values are determined in dependence on first differences (68; 82) between the first pixel values and the respectively corresponding further pixel values,
   - determining (84; 74) a second corrected image of the object surface (18) using the first and the further pixel values, wherein the second corrected image has a multiplicity of second corrected pixel values which are determined in dependence on second differences between the first pixel values and the respectively corresponding further pixel values (82; 68), and
   - determining (76) individual properties of the object surface (18) using the first corrected image and using the second corrected image,
   wherein a first threshold value (36) defining a first brightness value range (67) is provided, and wherein the further pixel values are used in dependence on whether or not they are located in the first brightness value range (67) in order to determine the first corrected pixel values,
   **characterized in that** a second threshold value (40) defining a second brightness value range is provided, and **in that** the further pixel values are used in dependence on whether or not they are located in the second brightness value range in order to determine the second corrected pixel values, wherein the first threshold value (36) and the second threshold value (40) differ from each other, and

wherein the first corrected image is a shadow-reduced image of the object surface (18), while the second corrected image is a reflection-corrected image of the object surface (18), or vice versa.

2. Method according to Claim 1, **characterized in that** the recording (56) of at least one further image of the object surface (18) includes recording (60) a multiplicity of further images, wherein the multiplicity of further images are recorded each with a different illumination of the object surface (18), and wherein the first corrected pixel values are determined (74; 84) in dependence on the multiplicity of further images.

3. Method according to Claim 1 or 2, **characterized in that** a further threshold value (38) defining the first brightness value range (67) is provided, such that the first brightness value range (67) is defined by an interval of brightness values which are all greater than zero and lie below a maximum brightness value that the camera sensor used can capture, said interval being delimited on two sides.

4. Method according to any of Claims 1 to 3, **characterized in that** a weight function is determined (66; 80) that represents whether or not a selected further pixel value lies in the first brightness value range (67), and **in that** the differences between the first pixel values and the further pixel values are weighted (68; 82) with the weight function in order to determine the corrected pixel values.

5. Method according to any of Claims 1 to 4, **characterized in that** a maximum brightness value (MH) is determined (62) over all first and further pixel values, and **in that** the first brightness value range (67) is defined in relation to the maximum brightness value (MH).

6. Method according to any of Claims 1 to 5, **characterized in that** a minimum reflection brightness value (BL) is determined over all first and further pixel values, and **in that** the first threshold value (36) lies below the minimum reflection brightness value.

7. Method according to any of Claims 1 to 6, **characterized in that** the at least one further direction includes a second direction (26c), which lies largely parallel and with a lateral offset to the first direction (26b) .

8. Method according to any of Claims 1 to 6, **characterized in that** the at least one further direction includes a second direction (28), which lies largely orthogonally to the first direction (26b).

9. Method according to any of Claims 1 to 8, **characterized in that** the object surface (18) is illuminated with light that predominantly has blue colour wavelengths.

10. Apparatus for inspecting an object surface (18), in particular for inspecting the surface of a powder bed with a plurality of powder particles (20), comprising a first illumination arrangement (12b) configured to illuminate the object surface (18) from a first direction (26b), comprising a further illumination arrangement (12a, 12c, 14) configured to illuminate the object surface (18) from at least one further direction, comprising a camera (30) configured to record a first image and at least one further image of the object surface (18), wherein the first image has a multiplicity of first pixel values representing the object surface (18) with an illumination from the first direction (26b), and wherein the at least one further image has a multiplicity of further pixel values representing the object surface (18) with an illumination from the corresponding further direction (26c, 28), and comprising an evaluation unit (32) configured to determine a first corrected image of the object surface (18) and a second corrected image of the object surface (18) using the first and the further pixel values, and which is furthermore configured to determine individual properties of the object surface (18) using the first corrected image and the second corrected image, wherein the first corrected image has a multiplicity of first corrected pixel values representing the object surface (18), wherein the first corrected pixel values are determined (68; 82) in dependence on first differences between the first pixel values and the respectively corresponding further pixel values, wherein provided in the evaluation unit (32) is a first threshold value (36) defining a first brightness value range (67), and wherein the evaluation unit (32) is configured to use the further pixel values in dependence on whether or not they lie in the first brightness value range (67) in order to determine the first corrected pixel values, wherein the second corrected image has a multiplicity of second corrected pixel values that are determined (82; 68) in dependence on second differences between the first pixel values and the respectively corresponding further pixel values, **characterized in that** a second threshold value (40) defining a second brightness value range is provided, and **in that** the further pixel values are used in dependence on whether or not they lie in the second brightness value range in order to determine the second corrected pixel values, wherein the first threshold value (36) and the second threshold value (40) differ from each other, and wherein the first corrected image is a shadow-reduced image of the object surface (18), while the second corrected image is a reflection-corrected image of the object surface (18), or vice versa.

## Revendications

1. Procédé pour inspecter la surface (18) d'un objet, notamment pour inspecter la surface d'un lit de poudre comportant une pluralité de particules de poudre (20), comprenant les étapes consistant à

   - éclairer (50) la surface (18) de l'objet depuis une première direction (26b) et acquérir (52) une première image de la surface (18) de l'objet, dans lequel la première image comporte une pluralité de premières valeurs de pixel qui représentent la surface (18) de l'objet avec l'éclairage provenant de la première direction (26b),
   - éclairer (54) la surface (18) de l'objet depuis au moins une direction supplémentaire (26c, 28) et acquérir (56) au moins une image supplémentaire de la surface (18) de l'objet, dans lequel l'au moins une image supplémentaire comporte une pluralité de valeurs de pixel supplémentaires qui représentent la surface (18) de l'objet avec l'éclairage provenant de la direction supplémentaire (26c, 28) correspondante,
   - déterminer (74 ; 84) une première image corrigée de la surface (18) de l'objet en utilisant les premières valeurs de pixel et les valeurs de pixel supplémentaires, dans lequel la première image corrigée possède une pluralité de premières valeurs de pixel corrigées qui représentent la surface (18) de l'objet, dans lequel les premières valeurs de pixel corrigées sont déterminées en fonction de premières différences (68 ; 82) entre les premières valeurs de pixel et les valeurs de pixel supplémentaires respectives correspondantes,
   - déterminer (84 ; 74) une seconde image corrigée de la surface (18) de l'objet en utilisant les premières valeurs de pixel et les valeurs de pixel supplémentaires, dans lequel la seconde image corrigée possède une pluralité de secondes valeurs de pixel corrigées qui sont déterminées (82 ; 68) en fonction de secondes différences entre les premières valeurs de pixel et les valeurs de pixel supplémentaires respectives correspondantes, et
   - déterminer (76) des propriétés individuelles de la surface (18) de l'objet en utilisant la première image corrigée et en utilisant la seconde image corrigée,
   dans lequel il est prévu une première valeur de seuil (36) qui définit une première plage de valeurs de luminosité (67), et dans lequel les valeurs de pixel supplémentaires sont utilisées pour déterminer les premières valeurs de pixel corrigées en fonction du fait qu'elles se situent ou non dans la première plage de valeurs de luminosité (67),
   **caractérisé en ce qu'**il est prévu une seconde valeur de seuil (40) qui définit une seconde plage de valeurs de luminosité, et **en ce que** les valeurs de pixel supplémentaires sont utilisées pour déterminer les secondes valeurs de pixel corrigées en fonction du fait qu'elles se situent ou non dans la seconde plage de valeurs de luminosité, dans lequel la première valeur de seuil (36) et la seconde valeur de seuil (40) sont différentes l'une de l'autre, et
   dans lequel la première image corrigée est une image à ombres réduites de la surface (18) de l'objet, tandis que la seconde image corrigée est une image à réflexion corrigée de la surface (18) de l'objet, ou inversement.

2. Procédé selon la revendication 1, **caractérisé en ce que** l'acquisition (56) d'au moins une image supplémentaire de la surface (18) de l'objet implique l'acquisition (60) d'une pluralité d'images supplémentaires, dans lequel la pluralité des images supplémentaires sont respectivement acquises avec un éclairage différent de la surface (18) de l'objet, et dans lequel les premières valeurs de pixel corrigées sont déterminées (74 ; 84) en fonction de la pluralité d'images supplémentaires.

3. Procédé selon la revendication 1 ou 2, **caractérisé en ce qu'**il est prévu une valeur de seuil supplémentaire (38) qui définit la première plage de valeurs de luminosité (67), de manière à ce que la première plage de valeurs de luminosité (67) soit définie par un intervalle délimité bilatéralement de valeurs de luminosité qui sont toutes supérieures à zéro et qui se situent en-dessous d'une valeur de luminosité maximale que le capteur de caméra utilisé peut détecter.

4. Procédé selon l'une quelconque des revendications 1 à 3, **caractérisé en ce qu'**une fonction de pondération est déterminée (66 ; 80), laquelle représente le fait qu'une valeur de pixel supplémentaire sélectionnée se situe ou non dans la première plage de valeurs de luminosité (67), et **en ce que** les différences entre les premières valeurs de pixel et les valeurs de pixel supplémentaires sont pondérées (68 ; 82) par la fonction de pondération pour déterminer les valeurs de pixel corrigées.

**5.** Procédé selon l'une quelconque des revendications 1 à 4, **caractérisé en ce qu'**une valeur de luminosité maximale (MH) est déterminée (62) sur la totalité des premières valeurs de pixel et des valeurs de pixel supplémentaires, et **en ce que** la première plage de valeurs de luminosité (67) est définie par rapport à la valeur de luminosité maximale (MH).

**6.** Procédé selon l'une quelconque des revendications 1 à 5, **caractérisé en ce qu'**une valeur de luminosité réfléchie minimale (BL) est déterminée sur la totalité des premières valeurs de pixel et des valeurs de pixel supplémentaires, et **en ce que** la première valeur de seuil (36) se situe en-dessous de la valeur de luminosité réfléchie minimale.

**7.** Procédé selon l'une quelconque des revendications 1 à 6, **caractérisé en ce que** l'au moins une direction supplémentaire comprend une seconde direction (26c) qui se situe de manière décalée sensiblement parallèlement et latéralement par rapport à la première direction (26b).

**8.** Procédé selon l'une quelconque des revendications 1 à 6, **caractérisé en ce que** l'au moins une direction supplémentaire inclut une seconde direction (28) qui se situe de manière sensiblement orthogonale à la première direction (26b).

**9.** Procédé selon l'une quelconque des revendications 1 à 8, **caractérisé en ce que** la surface (18) de l'objet est éclairée par une lumière qui possède des longueurs d'onde de couleur majoritairement bleues.

**10.** Dispositif pour inspecter la surface (18) d'un objet, notamment pour inspecter la surface d'un lit de poudre comportant une pluralité de particules de poudre (20), comprenant un premier système d'éclairage (12b) qui est conçu pour éclairer la surface (18) de l'objet depuis une première direction (26b), un système d'éclairage supplémentaire (12a, 12c, 14) qui est conçu pour éclairer la surface (18) de l'objet depuis au moins une direction supplémentaire, une caméra (30) qui est conçue pour acquérir une première image et au moins une image supplémentaire de la surface (18) de l'objet, dans lequel la première image comporte une pluralité de premières valeurs de pixel qui représentent la surface (18) de l'objet avec un éclairage provenant de la première direction (26b), et dans lequel l'au moins une image supplémentaire comporte une pluralité de valeurs de pixel supplémentaires qui représentent la surface (18) de l'objet avec un éclairage provenant de la direction supplémentaire (26c, 28) correspondante, et comprenant une unité d'évaluation (32) qui est conçue pour déterminer une première image corrigée de la surface (18) de l'objet et une seconde image corrigée de la surface (18) de l'objet en utilisant les premières valeurs de pixel et les valeurs de pixel supplémentaires, et qui est en outre conçue pour déterminer des propriétés individuelles de la surface (18) de l'objet en utilisant la première image corrigée et la seconde image corrigée, dans lequel la première image corrigée possède une pluralité de premières valeurs de pixel corrigées qui représentent la surface (18) de l'objet, dans lequel les premières valeurs de pixel corrigées sont déterminées (68 ; 82) en fonction de premières différences entre les premières valeurs de pixel et les valeurs de pixel supplémentaires respectives correspondantes, dans lequel il est prévu dans l'unité d'évaluation (32) une première valeur de seuil (36) qui définit une première plage de valeurs de luminosité (67), et dans lequel l'unité d'évaluation (32) est conçue pour utiliser les valeurs de pixel supplémentaires pour déterminer les premières valeurs de pixel corrigées en fonction du fait qu'elles se situent ou non dans la première plage de valeurs de luminosité (67), dans lequel la seconde image corrigée possède une pluralité de secondes valeurs de pixel corrigées qui sont déterminées (82 ; 68) en fonction de secondes différences entre les premières valeurs de pixel et les valeurs de pixel supplémentaires respectives correspondantes, **caractérisé en ce qu'**il est prévu une seconde valeur de seuil (40) qui définit une seconde plage de valeurs de luminosité, et **en ce que** les valeurs de pixel supplémentaires sont utilisées pour déterminer les secondes valeurs de pixel corrigées en fonction du fait qu'elles se situent ou non dans la seconde plage de valeurs de luminosité, dans lequel la première valeur de seuil (36) et la seconde valeur de seuil (40) sont différentes l'une de l'autre, et dans lequel la première image corrigée est une image à ombres réduites de la surface (18) de l'objet, tandis que la seconde image corrigée est une image à réflexion corrigée de la surface (18) de l'objet, ou inversement.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6088612 A
- CN 108154491 A
- US 20130089255 A1
- DE 102015208080 A1
- DE 102015208087 A1
- DE 1020161080791